# EUROPEAN PATENT APPLICATION

(11) **EP 2 728 576 A1**
(43) Date of publication of application: **07.05.2014**
(21) Application number: 13190720.6
(22) Date of filing: 29.10.2013
(51) Int. Cl.: G10L 15/22, G10L 15/32, G10L 15/30

(54) **Method and apparatus for voice recognition**

(30) Priority: 06.11.2012 KR 20120124772
(71) Applicant: Samsung Electronics Co., Ltd, Gyeonggi-do 443-742 (KR)
(72) Inventor: Bak, Eun-sang, Gyeonggi-do (KR)
(74) Representative: Hewett, Jonathan Michael Richard

(57) **Abstract**

A method and apparatus for voice recognition are disclosed. The apparatus includes: a voice receiver which receives a user's voice signal; a first voice recognition engine which receives the voice signal and recognizes voice based on the voice signal; a communicator which receives and transmits the voice signal to an external second voice recognition engine; and a controller which transmits the voice signal from the voice receiver to the first voice recognition engine, and in response to the first voice recognition engine being capable of recognizing voice from the voice signal, the controller outputs the voice recognition results of the first voice recognition engine, and in response to the first voice recognition engine being incapable of recognizing voice from the voice signal, the controller controls transmission of the voice signal to the second voice recognition engine through the communicator.

## Description

The present invention relates to voice recognition. More particularly, the present invention relates to a method and apparatus for voice recognition which performs voice recognition through a plurality of voice recognition engines that have different functions.

Voice recognition technology is used to recognize a voice signal as a signal which corresponds to a predetermined language, based on voice input by a user, etc., and may be utilized in various fields. In particular, voice recognition technology is easier to use than a conventional input mode in which a user presses a particular button with his/her finger. Thus, voice recognition technology replaces a conventional input mode, and is used in electronic apparatuses such as a TV, a mobile phone, etc. For example, a user may say a particular phrase such as "channel up" to change a channel of a TV. Then, the TV may recognize a user's voice signal through the voice recognition engine to adjust the channel.

With the development of voice recognition technology, the range of voice signals which are recognizable through the voice recognition engine has expanded. While only a limited number of words were recognized in the past, recent voice recognition engines can now recognize relatively longer sentences and provide an improved degree of accuracy in voice recognition.

The voice recognition engine may be largely classified into a word recognition engine and a consecutive word recognition engine, depending on its purpose of use. The word recognition engine is only required to recognize a limited number of words and thus it does not have large capacity. The word recognition engine may be used as an embedded engine of an electronic apparatus. The consecutive word recognition engine requires a larger capacity and may recognize more words and sentences. The word recognition engine may be used as a server in a cloud environment, which is currently popular.

The aforementioned word recognition engine and consecutive word recognition engine have opposite advantages and disadvantages in terms of capacity, data transmission, and speed, and the two engines may be used to improve efficiency of the voice recognition function. However, if different types of voice recognition engines installed in a single apparatus recognize a single voice signal, they may produce different voice recognition results and may cause a control problem with respect to the voice signal.

Accordingly, one or more exemplary embodiments of the present invention may provide a method and apparatus for voice recognition which performs voice recognition through a plurality of voice recognition engines providing different aspects of performance, and prevents conflicts of voice recognition results between the voice recognition engines.

The foregoing and/or other aspects may be achieved by providing a voice recognition apparatus including: a voice receiver which receives a user's voice signal; a first voice recognition engine which receives the voice signal and recognizes voice based on the voice signal; a communicator which receives and transmits the voice signal to an external second voice recognition engine; and a controller which transmits the voice signal from the voice receiver to the first voice recognition engine, and in response to the first voice recognition engine being capable of recognizing voice from the voice signal, outputs voice recognition results of the first voice recognition engine, and in response to the first voice recognition engine being incapable of recognizing voice from the voice signal, controls transmission of the voice signal to the second voice recognition engine through the communicator.

The first voice recognition engine may include an embedded engine that only recognizes preset words, and the second voice recognition engine may include a server-type engine that recognizes a plurality of consecutive words.

The first voice recognition engine may detect a plurality of mute areas of the voice signal, and may perform voice recognition with respect to the voice signal that exists between the mute areas.

The first voice recognition engine may determine that an area in which a level of a voice is at or below a preset value to be the mute area.

The voice receiver may receive a user's voice signal that is collected by a remote controller.

The voice recognition apparatus may include a display apparatus which include a display which displays an image thereon.

The controller may control the display to display thereon a user interface (UI) which includes information related to a voice recognition engine that processes a voice signal.

The foregoing and/or other aspects may be also achieved by providing a voice recognition method of a voice recognition apparatus including: receiving a user's voice signal; inputting the received voice signal to a first voice recognition engine; determining whether the first voice recognition engine is capable of performing voice recognition of the voice signal; and outputting the voice recognition results of the first voice recognition apparatus in response to a determination that the first voice recognition engine is capable of performing voice recognition with respect to the voice signal, and transmitting the voice signal to an external second voice recognition engine in response to the first voice recognition engine being incapable of performing voice recognition with respect to the voice signal.

The first voice recognition engine may include an embedded engine that only recognizes preset words, and the second voice recognition engine may include a server-type engine that recognizes a plurality of consecutive words.

The method may further include detecting a plurality of mute areas of the voice signal, and the first voice recognition engine may perform voice recognition with respect to the voice signal that exists between the mute areas.

The detecting of the mute area may include determining that an area in which a level of a voice is at or below a preset value is the mute area.

The voice recognition apparatus may include a display apparatus having a display which displays an image thereon.

The method may further include displaying a UI on the display, where the UI comprises information related to the voice recognition engine that processes the voice signal.

An exemplary embodiment may further provide a voice recognition apparatus including: a first voice recognition engine which receives a voice signal and recognizes a voice based on the voice signal; a communicator which receives and transmits the voice signal to an external second voice recognition engine; and a controller which transmits the voice signal to the first voice recognition engine, and outputs the voice recognition results of the first voice recognition engine when the voice signal is recognized, and transmits the voice signal to the second voice recognition engine, when the voice signal is not recognized.

The voice recognition apparatus may further include a voice receiver which receives a user's voice signal. The first voice recognition engine may include an embedded engine that only recognizes preset words, and the second voice recognition engine comprises a server-type engine that recognizes a plurality of consecutive words. The first voice recognition engine may perform voice recognition with respect to a voice signal existing between mute areas, when mute areas are detected.

The first voice recognition engine may determine that an area is the mute area when a level of a voice is at or below a preset value. In addition, the voice receiver may receive a user's voice signal that is collected by a remote controller. The voice recognition apparatus may further include a display apparatus which displays an image thereon.

The above and/or other aspects will become apparent and more readily appreciated from the following description of the exemplary embodiments, taken in conjunction with the accompanying drawings, in which:
FIG. 1 is a control block diagram of a voice recognition apparatus according to an exemplary embodiment;
FIG. 2 illustrates a process of determining a voice signal area to which voice recognition is to be performed, by detecting a mute area from the voice signal;
FIG. 3 illustrates a user interface (UI) that is displayed on a display; and
FIG. 4 is a flowchart of a voice recognition method of the voice recognition apparatus, according to an exemplary embodiment.

Below, exemplary embodiments will be described in detail with reference to the accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

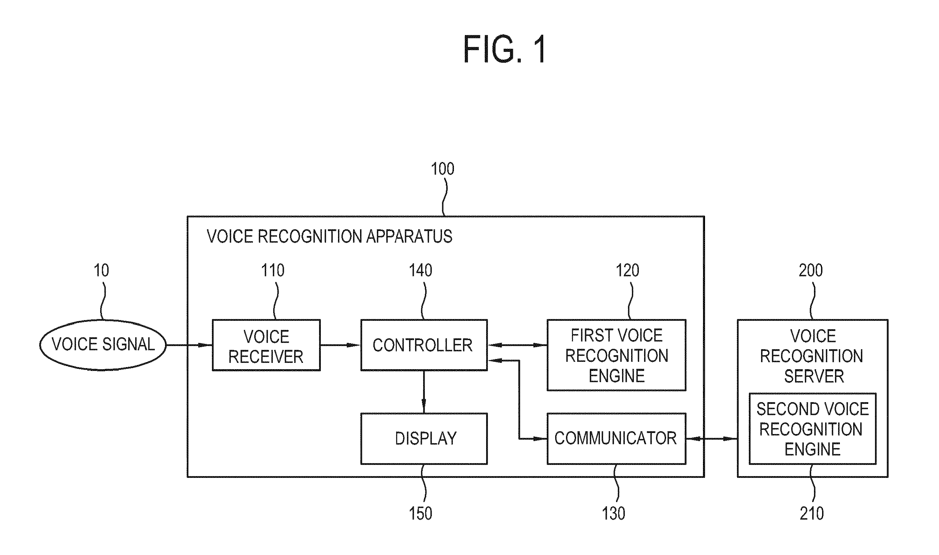

FIG. 1 is a control block diagram of a voice recognition apparatus 100 according to an exemplary embodiment.

As shown therein, the voice recognition apparatus 100 according to an exemplary embodiment includes a voice receiver 110, a first voice recognition engine 120, a communicator 130, and a controller 140, and may further include a display 150, depending on its type of embodiment.

The voice receiver 110 receives a user's voice signal 10. The voice receiver 110 may be implemented as a microphone provided in an external side of the voice recognition apparatus 100, or may be implemented as a device which receives the voice signal 10 that has been collected by a microphone provided in a remote controller (not shown).

The first voice recognition engine 120 receives a voice signal and processes the voice signal for voice recognition. The voice recognition function is a series of processes for converting a voice signal into language data, and the first voice recognition engine 120 may convert the voice signal into language data by various known methods of voice recognition. The voice signal which is received by the voice receiver 110 may include various noises in addition to a user's voice that has been recognized. Thus, preprocessing such as a frequency analysis may be performed in order to extract a user's voice from the voice signal and then the extracted voice component may be processed to recognize the voice. The voice recognition method of the voice recognition engine includes various known methods, which will not be repeated herein.

The first voice recognition engine 120 may be implemented as an embedded engine provided in the voice recognition apparatus 100, or may be implemented as additional hardware or as software executed by the controller 140 (to be described later). The embedded engine may only recognize a limited number of words. For example, in response to the voice recognition apparatus 100 being implemented as a display apparatus such as a TV, the embedded engine may be used to recognize a user's input for controlling a TV. In response to a user inputting a voice signal such as "channel up,", "power off," "mute," etc., the first voice recognition engine 120 may recognize the voice signal and in response to such a voice signal being identical to one of preset words included in a stored language list, the first voice recognition engine may output the recognized language data. The embedded engine may include a memory having a small capacity, and may have strength in speed, but only recognizes a limited number of words and thus may only process simple input such as a TV control.

The voice recognition apparatus 100 may further include a communicator 130 which receives and transmits a voice signal to the voice recognition server 200, which includes an external second voice recognition engine 210. The communicator 130 may transmit a voice signal to the voice recognition server 200 through a network, and may receive voice recognition results of the second voice recognition engine 210 from the voice recognition server 200.

As explained above, unlike the first voice recognition engine 120 which is the embedded engine, the second voice recognition engine 210 is implemented through a server and may recognize various words or consecutive words. For example, input of a particular search word in a search window or input of a sentence through an application such as SNS, require recognition of many words, and such recognition is not easily performed through the embedded engine, but may be performed through the second voice recognition engine 210 implemented through a server. That is, the second voice recognition engine 210 provides better performance even though the processing speed is slower because a voice signal should be transmitted to the voice recognition server 200.

Accordingly, the voice recognition apparatus 100 according to an exemplary embodiment may recognize the voice signal input through the voice receiver 110 by utilizing both the first and second voice recognition engines 120 and 210. In response to a particular voice signal being input, the voice recognition apparatus 100 should determine which voice recognition engine the input voice signal should be transmitted to, due to differences in use according to the characteristics of the voice recognition engines. In response to both the first and second voice recognition engines 120 and 210 outputting voice recognition results, a plurality of operations may be performed with respect to a single input and thus the input may not be performed as intended by a user. However, determining one of the first voice recognition engine 120 and the second voice recognition engine 210 based only on the voice signal, is not easy to do.

The controller 140 may be implemented as a microprocessor such as a central processing unit (CPU), micom, etc. which controls the voice recognition apparatus 100 as a whole according to an exemplary embodiment. In particular, the controller 140 transmits the voice signal from the voice receiver 110 to the first voice recognition engine 120 and/or the second voice recognition engine 210, and controls operations of the voice recognition apparatus 100 based on the output results. To do so, the controller 140 may include a voice branching device (not shown) which switches an input signal to a single path, such as a de-multiplexer, but is not limited thereto.

In response to a voice signal being input through the voice receiver 110, the controller 140 transmits the received voice signal to the first voice recognition engine 120. Upon receiving the voice signal, the first voice recognition engine 120 recognizes the voice based on the voice signal, and in response to the voice signal being equal to one of languages included in the stored language list, outputs the recognition results to the controller 140. In response to the voice signal not being equal to one of languages included in the stored language list, i.e., if the first voice recognition engine 120 does not recognize the voice, the first voice recognition engine 120 outputs to the controller 140 a predetermined signal, which includes information related to a failure to recognize voice. In this case, the controller 140 controls the communicator 130 to transmit the voice signal to the second voice recognition engine 210 included in the voice recognition server 200, and performs a predetermined operation based on the voice recognition results output by the second voice recognition engine 210.

In the voice recognition apparatus 100, the voice receiver 110 consecutively receives a user's voice, and transmits the results to the first voice recognition engine 120 and/or the second voice recognition engine 210, under the control of the controller 140.

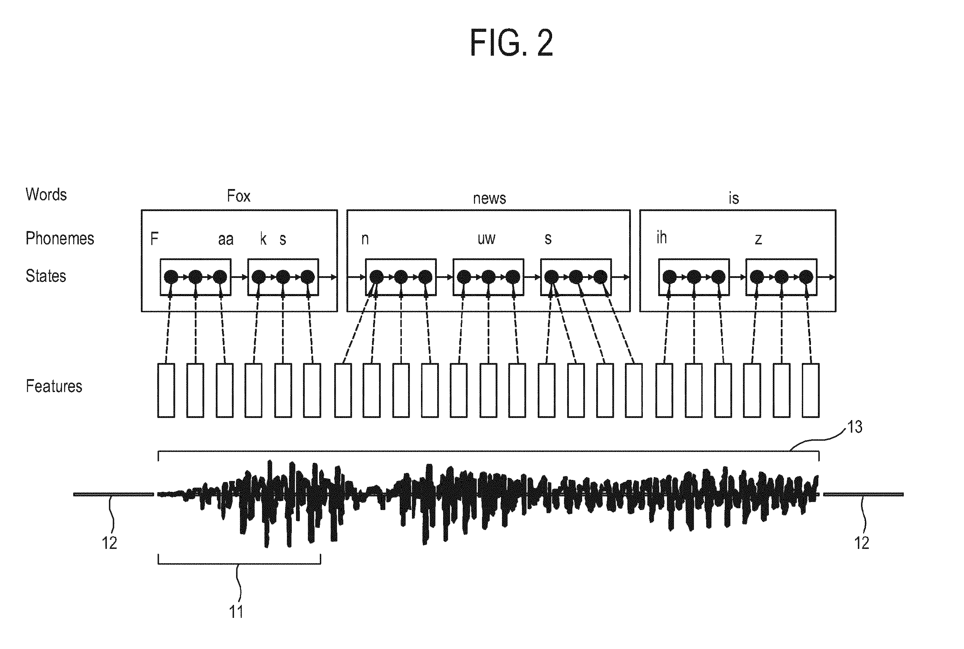

In this case, the first voice recognition engine 120 may sequentially recognize the input voice signal, and upon recognition of any language, may promptly output the recognition results. As shown in FIG. 2, for example, in response to a user consecutively inputting a voice "Fox news is," the voice signal is input to the first voice recognition engine 120. Then, the first voice recognition engine 120 searches features from the input voice signal, is connected to states of a voice model through the features, and detects each phoneme through the states. In response to the combination result of the detected phoneme being what is included in the stored language list, the first voice recognition engine 120 may output the corresponding results. In response to the stored language list containing a word "Fox" and detecting a phoneme falling under "Fox" from the front part of the voice signal, the first voice recognition engine 120 may output the recognition results of "Fox" regardless of the voice signal "news is" that is consecutively input after "Fox." Such a method is used to consecutively output recognition results of consecutive input voice.

The voice recognition apparatus 100 according to an exemplary embodiment may limit the method for selecting the voice recognition engine which will perform voice recognition, as explained above, even though it may output voice recognition results of both the first voice recognition engine 120 and/or second voice recognition apparatus 100. Thus, it would be proper to decide a voice signal area desired by a user and perform voice recognition with respect to the voice data for the decided area.

To solve the foregoing problem, the first voice recognition engine 120 detects a mute area from the consecutively input voice signal, and performs voice recognition based on the voice signal in the mute area. In response to an area in which the level of voice, which is less than or equal to a predetermined value, continues for predetermined time or longer, the first voice recognition engine 120 may determine such area to be a mute area.

Referring to FIG. 2, the first voice recognition engine 120 detects a first mute area and a second mute area 12 from the input voice signal, in which a voice signal is a less than or equal to a predetermined value for a predetermined time, and performs voice recognition with respect to the voice signal 13 existing between the mute areas 12. The first voice recognition engine 120, as an embedded engine according to an exemplary embodiment, may only recognize a limited number of words. Even if the first voice recognition engine 120 may recognize the word "Fox," the sentence "Fox news is" is not included in the stored language list, and thus the first voice recognition engine 120 may not output the voice recognition results. Accordingly, the first voice recognition engine 120 outputs to the controller 140 a predetermined signal including information related to a failure to output the voice recognition results. Upon receiving the information, the controller 140 transmits the voice signal which exists between the mute areas to the voice recognition server 200 through the communicator 130.

More specifically, for example, in response to a user saying "[mute] Channel five, what program is aired tonight [mute]", the purpose of such speech is to search a broadcasting program or to send a text message. However, in response to such a voice signal being input to the first voice recognition engine 120, the "Channel" in the front part of the voice signal may exist in the language list stored in the first voice recognition engine 120, and the first voice recognition engine 120 may output the results for the recognized "Channel." Thus, the first voice recognition engine 120 may output voice recognition results for the voice signal that is properly processed by the second voice recognition engine 210, and the voice recognition apparatus 100 may perform an operation according to the results output by the first voice recognition engine 120. As described above, in response to the entire voice signal existing between the mute areas being processed, the first voice recognition engine 120 not only recognizes the term "Channel," but also recognizes the entire voice signal "Channel 5, what program is aired tonight" which exists between the mute areas, and such recognition results may not be output since such sentence does not exist in the language list of the first voice recognition engine 120. Even if such recognition results were output, reliability may be low. In this case, the controller 140 may determine that such voice signal may not be properly processed by the first voice recognition engine 120 as the embedded engine, and may decide that the second voice recognition engine 210, as a server-type engine, would process the voice signal, and the results output by the first voice recognition engine 120 may be ignored.

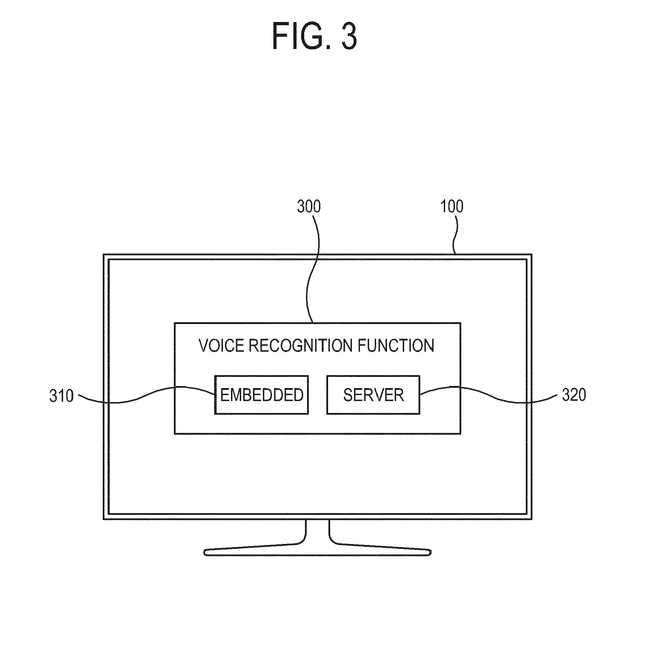

The voice recognition apparatus 100 according to an exemplary embodiment may be implemented as a display apparatus including the display 150 which displays an image thereon. In this case, the controller 140 may control display 150 to display thereon a UI which includes information related to the voice recognition engine that processes the voice signal. As shown in FIG. 3, in response to the voice signal being input and an operation such as a change of a channel or an input of a search word being performed, according to the results, the UI showing which voice recognition engine will perform an operation based on the voice recognition results may be displayed to provide feedback to the user.

The voice recognition apparatus 100 according to an exemplary embodiment performs voice recognition through a plurality of voice recognition engines having different functions, and prevents conflict of voice recognition results from among the voice recognition engines, and output voice recognition results for the voice signal area as desired by a user.

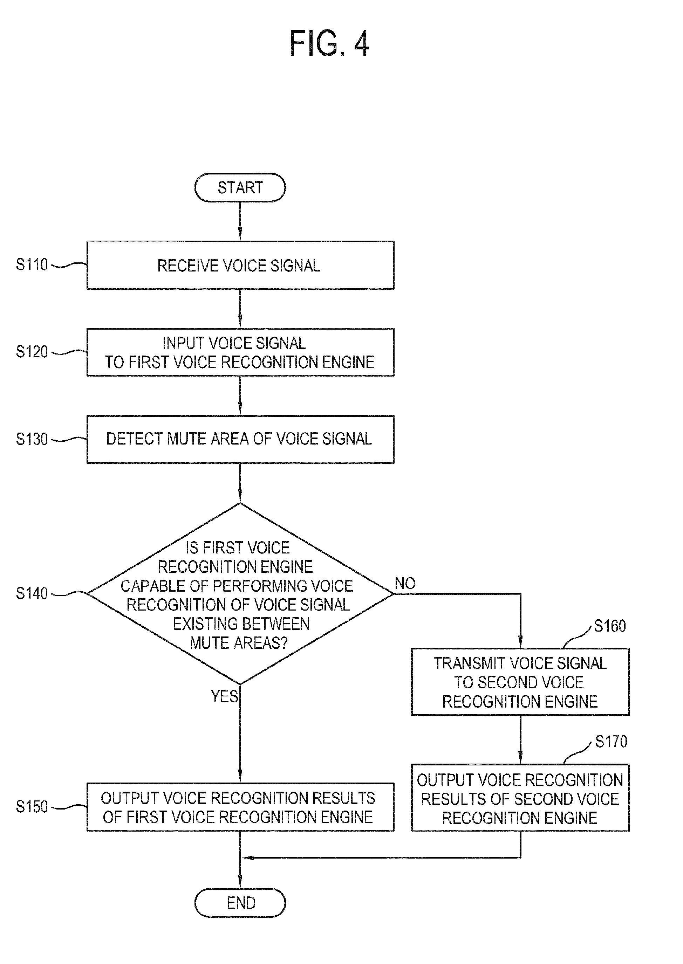

FIG. 4 is a flowchart of a method of voice recognition of the voice recognition apparatus 100, according to an exemplary embodiment.

The voice recognition apparatus 100 according to an exemplary embodiment may perform voice recognition with respect to a user's voice signal through the first or second voice recognition engine. The first voice recognition engine is implemented as an embedded engine provided in the voice recognition apparatus and has a small capacity. The first voice recognition engine only recognizes a limited number of words. The second voice recognition engine is implemented as a server-type engine and is provided in an external voice recognition server 200. The second voice recognition engine recognizes a plurality of words and sentences.

The voice recognition apparatus receives a user's voice signal (S110). The voice recognition apparatus may receive a user's voice through a microphone provided therein or through a voice signal collected through a microphone of a remote controller.

The voice recognition apparatus transmits the received user's voice signal to the first voice recognition engine (S120).

The first voice recognition engine detects the mute area of the voice signal (S130), and the voice signal existing between the detected mute areas becomes a subject on which the voice recognition is performed through the first voice recognition engine. In response to an area in which the level of voice is less than or equal to a predetermined value continues for a predetermined time or more in the voice signal, the first voice recognition engine may decide that such area is the mute area. Detecting the mute area has been explained above with reference to FIG. 2.

As described above, the first voice recognition engine may be implemented as an embedded engine, and may only recognize a limited number of words stored in the language list. The voice recognition apparatus determines whether voice recognition may be performed with respect to the voice signal existing between the mute areas through the first voice recognition engine (S140), and in response to the voice recognition being performed, the first voice recognition engine outputs the voice recognition results (S150). In response to the voice recognition not being performed, the first voice recognition engine transmits the voice signal to the voice recognition server, which includes the second voice recognition engine (S160).

The voice recognition results of the first voice recognition engine and/or the second voice recognition engine are transmitted to the controller of the voice recognition apparatus, and the controller performs a predetermined operation according to the voice recognition results.

The voice recognition apparatus according to an exemplary embodiment may be implemented as a display apparatus which includes a display which displays an image thereon. In this case, the voice recognition apparatus may display a UI which includes information related to the voice recognition engine that processes the voice signal. This has been explained above with reference to FIG. 3.

The voice recognition method of the voice recognition apparatus according to the exemplary embodiments performs voice recognition with respect to the voice signal through a plurality of voice recognition engines having different functions, prevents conflict of voice recognition results from among the voice recognition engines, and outputs the voice recognition results for the voice signal area, as desired by a user.

As described above, a method and apparatus for voice recognition, according to the exemplary embodiments performs voice recognition through a plurality of voice recognition engines having different functions, and prevents conflict of voice recognition results from the voice recognition engines.

Although a few exemplary embodiments have been shown and described, it will be appreciated by those skilled in the art that changes may be made in these exemplary embodiments without departing from the invention, the scope of which is defined in the appended claims.

## Claims

1. A voice recognition apparatus comprising:
a voice receiver which receives a user's voice signal;
a first voice recognition engine which receives the voice signal and recognizes voice based on the voice signal;
a communicator which receives and transmits the voice signal to an external second voice recognition engine; and
a controller which transmits the voice signal from the voice receiver to the first voice recognition engine, and in response to the first voice recognition engine being capable of recognizing voice from the voice signal, the controller outputs the voice recognition results of the first voice recognition engine, and in response to the first voice recognition engine being incapable of recognizing voice from the voice signal, the controller controls transmission of the voice signal to the second voice recognition engine through the communicator.

2. The voice recognition apparatus according to claim 1, wherein the first voice recognition engine comprises an embedded engine that only recognizes preset words, and the second voice recognition engine comprises a server-type engine that recognizes a plurality of consecutive words.

3. The voice recognition apparatus according to claim 2, wherein the first voice recognition engine detects a plurality of mute areas of the voice signal, and performs voice recognition with respect to the voice signal existing between the mute areas.

4. The voice recognition apparatus according to claim 3, wherein the first voice recognition engine determines that an area in which a level of a voice is at or below a preset value is the mute area.

5. The voice recognition apparatus according to one of claims 1 to 4, wherein the voice receiver receives a user's voice signal that is collected by a remote controller.

6. The voice recognition apparatus according to one of claims 1 to 5, wherein the voice recognition apparatus comprises a display apparatus which includes a display which displays an image thereon.

7. The voice recognition apparatus according to claim 6, wherein the controller controls the display to display thereon a user interface (UI) which comprises information related to a voice recognition engine that processes a voice signal.

8. A method of voice recognition of a voice recognition apparatus, the method comprising:
receiving a user's voice signal;
inputting the received voice signal to a first voice recognition engine;
determining whether the first voice recognition engine is capable of performing voice recognition on the voice signal; and
outputting voice recognition results of the first voice recognition apparatus upon a determination that the first voice recognition engine is capable of performing voice recognition with respect to the voice signal, and transmitting the voice signal to an external second voice recognition engine in response to a determination that the first voice recognition engine is incapable of performing voice recognition with respect to the voice signal.

9. The voice recognition method according to claim 8, wherein the first voice recognition engine comprises an embedded engine that recognizes only preset words, and the second voice recognition engine comprises a server-type engine that recognizes a plurality of consecutive words.

10. The voice recognition method according to claim 9, further comprising detecting a plurality of mute areas of the voice signal, wherein the first voice recognition engine performs voice recognition with respect to the voice signal that exists between the mute areas.

11. The voice recognition method according to one of claims 8 to 10, wherein the detecting of the mute area comprises determining that an area in which a level of a voice is at or below a preset value is the mute area.

12. The voice recognition method according to one of claims 8 to 11, wherein the voice recognition apparatus comprises a display apparatus including a display which displays an image thereon.

13. The voice recognition method according to claim 12, further comprising displaying on the display a UI comprising information on the voice recognition engine that processes the voice signal.
